Europäisches Patentamt

European Patent Office

Office européen des brevets

(11) Numéro de publication: **0 415 463 A2**

# DEMANDE DE BREVET EUROPEEN

(21) Numéro de dépôt: 90200098.3

(22) Date de dépôt: **16.01.90**

(51) Int. Cl.⁵: **H04N 1/34**, H04N 1/44

(30) Priorité: **01.09.89 BE 8900931**

(43) Date de publication de la demande:
**06.03.91 Bulletin 91/10**

(84) Etats contractants désignés:
**AT CH DE ES FR IT LI LU NL**

(71) Demandeur: **T.D.S. INTERNATIONAL, N.V.**
**Dascottelei 84**
**B-2100 Deurne(BE)**

(72) Inventeur: **Desmet, Willy**
**Frilinglei 54**
**B-2130 Brasschaat(BE)**

(74) Mandataire: **Donné, Eddy**
**Bureau M.F.J. Bockstael nv Arenbergstraat**
**13**
**B-2000 Antwerpen(BE)**

(54) **Procédure pour l'optimalisation des communications par télécopieur et stations de télécopie utilisées à cet effet.**

(57) Procédure pour l'optimalisation de la communication par télécopieur, caractérisée en ce qu'elle consiste principalement dans l'établissement d'un nombre de stations de télécopie, chacune d'elle mettant au moins un télécopieur à disposition, moyennant rémunération, de la clientèle pouvant envoyer et/ou récevoir des messages télécopiés par l'entremise de la station.

EP 0 415 463 A2

# PROCÉDURE POUR L'OPTIMALISATION DES COMMUNICATIONS PAR TÉLÉCOPIEUR ET STATIONS DE TÉLÉCOPIE UTILISÉES À CET EFFET.

La présente invention a trait a une procédure pour l'optimalisation des communications par télécopieur.

L'avantage et l'utilité des communications par télécopieur pour la transmission de données ne doivent plus être établis. Dans beaucoup d'applications ce médium de communication ne peut néanmoins pas être utilisé, soit parce qu'on ne possède pas de télécopieur, soit que l'on possède un de ces appareils mais qu'on ne se trouve pas dans la pièce, par exemple un bureau, où l'appareil est installé.

L'échange de télécopies est donc loin d'être parfait. La présente invention a pour but de promouvoir l'utilisation des appareils de télécopie, de la faciliter et de l'optimaliser à l'intention du grand public.

A cet effet la procédure suivant la présente invention comprend l'installation d'un nombre de stations de télécopie, chacune possédant au moins un télécopieur qui est disponible, moyennant rémunération, à la clientèle qui peut envoyer/recevoir des messages télécopiés.

Une telle station installée à proximité évite de devoir disposer d'un télécopier chez soi. Il suffit d'aller à cette station pour envoyer un message par télécopieur.

A l'opposé le correspondant ne doit pas non plus avoir un télécopieur à disposition. Un message par télécopieur peut être envoyé à une station similaire où le correspondant peut enlever le message télécopié.

Dans une réalisation particulière de la présente invention, chaque station de télécopie possède au moins un télécopieur commandé par un appareil à jetons pour permettre au clients de transmettre un message par le télécopieur sans avoir recours à l'assistance d'une tierce personne.

Dans une réalisation remarquable de la présente invention, les messages télécopiés reçus dans chaque station sont conservés dans une boîte réservée au destinataire.

Dans une réalisation préférentielle de la présente invention une station prévient le destinataire, soit à sa demande, soit automatiquement d'un message télécopié reçu dans la station.

Dans une réalisation pratique de la présente invention les stations de télécopie sont clairement identifiées d'une mainère uniforme.

Des campagnes publicitaires peuvent être organisées régulièrement au profit des stations. De temps en temps de journées de télécopie à l'échelle nationale peuvent être organisées pour promouvoir l'usage des stations.

L'invention a également trait à une station de télécopie qui applique la procédure selon l'une des réalisations précédentes.

La présente invention a donc trait à une station de télécopie caractérisée en ce qu'elle possède au moins un appareil de télécopie qui, moyennant rémunération, est à la disposition de la clientèle. De préférence, un des appareils pour l'envoi est équipé d'un appareil à jetons.

D'autres caractéristiques et avantages de la présente invention ressortiront de la description suivante d'une procédure pour l'optimalisation des communications par télécopie et d'une station de télécopie utilisée à cet effet. La description ne sert que d'exemple et ne limite pas le cadre de l'invention.

Suivant l'invention, un grand nombre de stations de télécopie sont établies, dans tout le pays et à l'étranger, étant toutes clairement reconnaissables par l'entremise d'un logo et d'une enseigne lumineuse identiques. Toutes ces stations de télécopie font partie d'une chaîne possédant un service central de coordination qui peut être consulté gratuitement par les exploitants des stations et duquel les exploitants des stations obtiennent régulièrement des informations en ce qui concerne les développements dans la télécopie à l'échelle mondiale.

Chaque station de télécopie comprend un ou plusieurs télécopieurs équipés des dernières nouveautés, mais d'un maniement simple et placé(s) sur une console solide. Au moins un des télécopieurs, permettant à la clientèle d'envoyer des messages, est relié à un appareil à jetons afin que l'appareil puisse être manié par le client sans avoir recours à une tierce personne.

Chaque station de télécopie possède également une ou plusieurs boîtes pour conserver les messages télécopiés reçus qui, par exemple, peuvent être ordonnées par destinataire. Ces destinataires peuvent être prévenus automatiquement à la réception d'un message par l'exploitant de la station de télécopie ou seulement à la requête de ce destinataire qui attend un message télécopié.

Les différentes stations de télécopie demandent une rémunération uniforme par format A4 en fonction de la destination.

Le service central approvisionne toutes ou quelques stations de télécopie du papier nécessaire ce qui peut donc se faire grâce à un achat groupé. Le service central organise régulièrement une campagne publicitaire à l'échelle nationale pour soutenir les stations de télécopie et le service central organise de temps en temps des journées de télécopie à l'échelle nationale pour la promotion de l'utilisation des stations de télécopie.

Un service de maintenance central est prévu pour toutes les stations. Lors d'une défectuosité au télécopieur ou à l'appareil à jetons, une appareil de remplacement est livré dans les 24 heures.

Chaque station de télécopie possède aussi les annuaires des abonnés-télécopie nécessaires comprenant les numéros des abonnés-télécopie du pays mais aussi à l'étranger. En outre, le service central distribue les annuaires des abonnés-télécopie comprenant toutes les stations et leurs données pertinentes. Une station et ses données pertinentes située en Europe sera, par exemple, reprise gratuitement dans un annuaire d'abonnés-télécopie pour l'Europe.

Lors de l'installation d'une nouvelle station de télécopie, le service central s'acquitte de l'équipement, avec exception éventuelle du télécopieur et de l'appareil à jetons complémentaire qui, selon le cas, peuvent être achetés par l'exploitant.

Le service central s'acquitte de l'enseigne lumineuse, du logo pour la vitrine, des annuaires comprenant les numéros des abonnés-télécopie et d'un stock de papier. Dans certains cas, le service central peut également fournir les enveloppes et le papier relatifs au système de boîtes pour les messages télécopiés reçus. L'exploitant, si le cas se présente, peut conclure un contrat de maintenance. Par l'entremise de ce contrat, l'exploitant a droit à toute une série de facilités telles que reprises ci-dessus. L'envoi ou la réception d'un message télécopié est maintenant fort facilité pour les utilisateurs. Une station de télécopie située dans les environs évite à l'utilisateur de devoir acquérir un télécopieur. Les gens possédant un télécopieur peuvent, sans aucun problème, communiquer des messages télécopiés à des correspondants possédant un tel appareil. Les utilisateurs possédant un télécopieur à la maison ou au bureau, mais qui en sont absents, peuvent envoyer un message par télécopie par l'entremise d'une station de télécopie chez eux, au bureau ou ailleurs.

L'envoi et la réception des télécopies peut facilement devenir une occupation quotidienne.

**Revendications**

1.- Procédure pour l'optimalisation de la communication par télécopieur, caractérisée en ce qu'elle consiste principalement dans l'établissement d'un nombre de stations de télécopie, chacune d'elle mettant au moins un télécopieur à disposition, moyennant rémunération, de la clientèle pouvant envoyer et/ou recevoir des messages télécopiés par l'entremise de la station.

2.- Procédure suivant la revendication précédente, caractérisée en ce que chaque station de télécopie est équipée d'au moins un télécopieur commandé par un appareil à jetons afin que les client puissent envoyer des messages en télécopie par le télécopieur sans avoir recours à l'assistance de tierces personnes.

3.- Procédure suivant l'une des revendications précédentes, caractérisée en ce que chaque station conserve les messages télécopiés reçus dans une boîte réservée au destinataire.

4.- Procédure suivant la revendication précédente, caractérisée en ce que ces messages reçus sont mis sous enveloppe réservée spécialement à cet effet.

5.- Procédure suivant l'une des revendications précédentes, caractérisée en ce qu'une station prévienne le destinataire, soit sur demande, soit automatiquement après réception, d'un message télécopié reçu dans celle-ci.

6.- Procédure suivant l'une des revendications précédentes, caractérisée en ce qu'une rémunération pratiquement similaire est appliquée par page de format A4 suivant la destination.

7.- Procédure suivant l'une des revendications précédentes, caractérisée en ce que des annuaires comprenant les numéros d'abonnés-télécopie pour l'intérieur et l'étranger sont mis à disposition de la clientèle dans chaque station de télécopie.

8.- Procédure suivant l'une des revendications précédentes, caractérisée en ce que toutes les stations de télécopie sont reconnaissables d'une manière uniforme.

9.- Procédure suivant l'une des revendications précédentes, caractérisée en ce que toutes les stations de télécopie sont rendues reconnaissables par logo et enseigne lumineuse.

10.- Procédure suivant l'une des revendications précédentes, caractérisée en ce que toutes les stations de télécopie font partie d'une chaîne avec service central.

11.- Procédure suivant la revendication 10, caractérisée en ce que le service central organise régulièrement des campagnes publicitaires l'avantage des stations.

12.- Procédure suivant l'une des revendications 10 et 11, caractérisée en ce que le service central organise des journées de télécopie pour le promotion de l'utilisation des stations.

13.- Procédure suivant l'une des revendications 10 à 12, caractérisée en ce que le service central peut être consulté gratuitement par les stations en ce qui concerne la télécopie.

14.- Procédure suivant l'une des revendications 10 à 13, caractérisée en ce que le service central fournit régulièrement des informations en ce qui concerne la télécopie à l'échelle mondiale.

15.- Procédure suivant l'une des revendications 10 à 13, caractérisée en ce que le service central édite ses annuaires d'abonnés-télécopie comprenant toutes les données en ce qui concerne les stations.

16.- Procédure suivant l'une des revendications 10 à 14, caractérisée en ce que le service central fournit le papier nécessaire à au moins un nombre de stations centrales.

17.- Procédure suivant l'une des revendications précédentes, caractérisée en ce que le service de maintenance pour plusieurs stations est prévu avec la possibilité de se charger du remplacement d'appareils défectueux par un appareil de remplacement.

18.- Station de télécopie prévue pour être utilisée suivant la procédure d'une des revendications précédentes.

19.- Station de télécopie suivant la revendication 18, caractérisée en ce qu'elle contienne au moins un télécopieur qui est à disposition de la clientèle pour envoyer un message par télécopie moyennant paiement d'une rémunération.

20.- Station de télécopie suivant la revendication précédente, caractérisée en ce qu au moins un des télécopieurs est relié à un appareil à jetons afin qu'il puisse être utilisé par la clientèle sans avoir recours à l'assistance d'une tierce personne.

21.- Station de télécopie suivant l'une des revendications 18 à 20, caractérisée en ce qu'elle contienne un système de boîtes pour la conservation des messages télécopiés reçus.